# FASCICULE DE BREVET EUROPEEN

(11) **EP 3 877 198 B1**
(45) Date de publication et mention de la délivrance du brevet: **29.01.2025**
(21) Numéro de dépôt: 19820832.4
(22) Date de dépôt: 07.11.2019
(51) Int. Cl.: B60C 1/00, C08C 19/22, C08C 19/25, C08C 19/44, C08F 236/06, C08F 236/10, C08L 15/00

(54) **COMPOSITION DE CAOUTCHOUC À BASE D'UN ÉLASTOMÈRE DIÉNIQUE MODIFIÉ**
KAUTSCHUKZUSAMMENSETZUNG AUF DER BASIS EINES MODIFIZIERTEN DIENELASTOMERS
RUBBER COMPOSITION BASED ON A MODIFIED DIENE ELASTOMER

(30) Priorité: 08.11.2018 FR 1860303
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: DE-GAUDEMARIS, Benoît, 63040 Clermont-Ferrand Cedex 9 (FR); CHATARD, Julien, 63040 Clermont-Ferrand Cedex 9 (FR); DIRE, Charlotte, 63040 Clermont-Ferrand Cedex 9 (FR); ROOS, Kevin, 63040 Clermont-Ferrand Cedex 9 (FR); GADENNE, Benôit, 63040 Clermont-Ferrand Cedex 9 (FR)
(74) Mandataire: M.F.P. Michelin
(86) Numéro de dépôt international: PCT/FR2019/052642
(87) Numéro de publication internationale: WO 2020/094989

(56) Documents cités:
- US-A1- 2016 159 957
- US-A1- 2016 194 411

## Description

### Domaine technique

L'invention se rapporte à une composition de caoutchouc comprenant un élastomère diénique modifié et de la silice à titre de charge renforçante.

### Technique antérieur

Depuis que les économies de carburant et la nécessité de préserver l'environnement sont devenues une priorité, il est souhaitable de produire des mélanges possédant une hystérèse aussi faible que possible afin de pouvoir les mettre en oeuvre sous forme de compositions de caoutchouc utilisables pour la fabrication de divers produits semi-finis entrant dans la composition de pneus, tels que par exemple des sous-couches, des flancs, des bandes de roulement, et afin d'obtenir des pneus possédant une résistance au roulement réduite.

Idéalement, par exemple, une bande de roulement de pneu doit obéir à un grand nombre d'exigences techniques, souvent antinomiques, parmi lesquelles une résistance élevée à l'usure tout en offrant au pneu une faible résistance au roulement.

Par ailleurs la réduction de l'hystérèse des mélanges, gage d'une réduction de la résistance au roulement, doit également se faire en conservant intacte l'aptitude à la mise en oeuvre, en particulier à cru, des mélanges, tout en maintenant la résistance au fluage des élastomères.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de modification, de couplage ou d'étoilage dans le but d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante telle que la silice, il a été proposé d'utiliser des polymères diéniques fonctionnalisés par des dérivés alcoxysilanes notamment en combinant ou non la fonctionnalisation par des fonctions alcoxysilanes à la fonctionnalisation par d'autres fonctions, notamment des fonctions amine, imine, époxy ou encore thiol.

La fonctionnalisation par des composés alcoxysilane porteurs d'une fonction aminée a été largement décrite dans la littérature brevet. Les élastomères fonctionnalisés en bout de chaîne par des fonctions alcoxysilanes portant un groupement aminé ont été associés aussi bien à de la silice qu'à du noir de carbone, voire un mélange de ces deux charges, dans des compositions de caoutchouc destinées à la fabrication de pneus.

La Demanderesse a décrit quant à elle, dans le document WO 2009133068 A1, un élastomère diénique fonctionnalisé essentiellement constitué par l'espèce couplée d'un élastomère possédant au sein de la chaîne un groupement porteur d'une fonction alcoxysilane et d'une fonction amine, l'atome de silicium de ce groupement liant les deux parties de la chaîne élastomère diénique. Cet élastomère fonctionnalisé en milieu de chaîne confère à la composition le contenant des propriétés mécaniques et dynamiques améliorées, notamment une hystérèse améliorée, tout en conservant une mise en oeuvre à cru satisfaisante, en vue notamment d'une utilisation en bande de roulement pour pneu.

Les documents EP 2 003 146 A2, US 2014/0243476A1 décrivent des élastomères diéniques modifiés avec des agents de modification possédant à la fois au moins un atome de silicium et au moins un atome d'azote. JP 2016017097A décrit des élastomères diéniques modifiés avec des agents de modification possédant à la fois au moins un atome de silicium et au moins un atome d'azote, portant en extrémité des chaînes non liée à l'agent de modification, un groupement fonctionnel aminé. Ces documents proposent d'améliorer les propriétés mécaniques et dynamiques des compositions de caoutchouc possédant des faibles taux de charge renforçante et destinées à une application pneu, et mettent notamment en avant des gains en adhérence sur sol mouillé, une amélioration de la dissipation de chaleur, des gains en résistance au roulement ou encore en abrasion. Les documents US2016/159957 A1 et US2016/194411 A1 décrivent des élastomères diéniques modifiés par des agents de modification comprenant un ou plusieurs atomes de silice.

En vue d'atteindre certaines performances du pneu, il peut s'avérer nécessaires d'utiliser plus ou moins de charge renforçante dans les compositions de caoutchouc qui composent les différentes parties du pneu. Or, l'utilisation de forte quantité de charge pour atteindre certaines de ces performances est toutefois antinomique avec la baisse recherchée de la résistance au roulement. En effet, l'utilisation d'un fort taux de charge renforçante dans le mélange utilisé pour fabriquer la bande de roulement, pénalise fréquemment, le cas échéant souvent de manière rédhibitoire, les propriétés de résistance au roulement, en s'accompagnant d'une augmentation importante des pertes hystérétiques de la composition de caoutchouc.

Le problème technique que se propose de résoudre la présente invention est d'atténuer l'effet de l'augmentation du taux de charge renforçante sur les propriétés dynamiques des compositions de caoutchouc et leur mise en oeuvre en vue d'une utilisation de ces compositions pour la fabrication de pneus possédant une résistance au roulement réduite.

Poursuivant ses recherches, la Demanderesse a découvert que l'utilisation de certains élastomères diéniques modifiés particuliers dans des compositions de caoutchouc permet de réduire l'impact de l'augmentation du taux de charges renforçantes sur le compromis mise en oeuvre/hystérèse. Il est ainsi possible de fournir des compositions de caoutchouc pour pneu comprenant un taux élevé en charges renforçantes tout en minimisant l'effet de ce taux élevé sur les propriétés d'hystérèse et de mise en oeuvre des compositions.

### Exposé de l'invention

L'invention a donc pour objet une composition de caoutchouc à base au moins d'une charge renforçante comprenant de la silice et d'une matrice élastomère comprenant un élastomère diénique modifié, caractérisée en ce que
- le taux de silice est supérieur ou égal à 80 pce,
- le taux d'élastomère diénique modifié est supérieur ou égal à 75 pce, et
- l'élastomère diénique modifié comprend des macromolécules comprenant au sein de leur structure une unité de branchement n-fonctionnel, n valant au moins 1, de préférence au moins 3, constituée d'un groupement comprenant au moins deux atomes de silicium substitués par des branches élastomères et reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement hydrocarboné de valence au moins 2 se faisant par l'intermédiaire d'un groupement espaceur divalent.

### Description détaillée

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également l'intervalle représenté par l'expression "entre a et b".

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, l'abréviation "pce" signifie parties en poids pour cent parties en masse d'élastomères présents dans la matrice élastomère, la matrice élastomère désignant la totalité des élastomères présents dans la composition de caoutchouc.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. De la même manière, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Dans la présente description, on entend par viscosité Mooney, la viscosité Mooney ML(1+4)100 °C d'un composé, notamment de l'élastomère diénique modifié de l'invention, mesurée selon la norme ASTM D1646.

Dans la présente description, lorsqu'aucune précision n'est donnée, on entend par amine primaire ou secondaire une amine primaire ou secondaire aussi bien protégée que non protégée par un groupement protecteur connu de l'homme du métier.

Dans la présente description, on entend par élastomère diénique modifié un mélange de macromolécules issues de la réaction d'un élastomère diénique vivant avec un agent de modification comprenant au moins deux fonctions réactives vis-à-vis de l'extrémité réactive de l'élastomère diénique vivant, ce composé comportant plusieurs hétéroatomes dont au moins deux atomes de silicium.

L'homme du métier comprendra qu'une réaction de modification avec un agent comprenant plus d'une fonction réactive vis-à-vis de l'élastomère vivant résulte en un mélange de macromolécules fonctionnalisées en bout de chaîne et en milieu de chaîne (également appelées couplées), constituant les espèces linéaires fonctionnelles de l'élastomère modifié, et de macromolécules à au moins trois branches et au plus autant de branches que de fonctions réactives portées par l'agent de modification, constituant les espèces branchées de l'élastomère modifié. Selon les conditions opératoires, principalement le rapport molaire de l'agent de modification aux chaînes vivantes et le nombre de ses fonctions réactives, certaines espèces sont plus ou moins présentes, voire majoritaires, dans le mélange.

Dans la présente description, l'expression "unité monomère", qu'il soit diène ou autre, s'entend comme une unité répétitive du polymère issue du monomère en question.

Dans la présente description, l'expression "unité de branchement", s'entend comme une unité non répétitive (il n'y en a qu'une dans le polymère), issue de l'agent de modification sur lequel ont réagi le ou les chaînes élastomères diéniques vivantes, et dont émanent le ou les chaînes élastomères diéniques.

Il convient de noter que dans le cadre de l'invention, les monomères utilisés pour la synthèse de l'élastomère diénique modifié, ainsi que les composés de la composition de caoutchouc, peuvent être d'origine fossile ou biosourcée. Dans ce dernier cas, ils peuvent être partiellement ou totalement issus de la biomasse ou obtenus à partir de matières premières renouvelables issues de la biomasse.

Ainsi l'invention concerne une composition de caoutchouc à base au moins d'une charge renforçante comprenant de la silice et d'une matrice élastomère comprenant un élastomère diénique modifié, caractérisée en ce que
- le taux de silice est supérieur ou égal à 80 pce,
- le taux d'élastomère diénique modifié est supérieur ou égal à 75 pce, et
- l'élastomère diénique modifié comprend des macromolécules comprenant au sein de leur structure une unité de branchement n-fonctionnel, n valant au moins 1, de préférence au moins 3, constituée d'un groupement comprenant au moins deux atomes de silicium substitués par des branches élastomères et reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement hydrocarboné de valence au moins 2 se faisant par l'intermédiaire d'un groupement espaceur divalent.

Par élastomère diénique susceptible d'être utilisé comme l'élastomère diénique modifié dans les compositions conformes à l'invention, doit être compris de manière connue un élastomère synthétique constitué au moins en partie d'unités monomères diènes, conjuguées ou non.

On entend plus particulièrement par élastomère diénique synthétique:
(a) - tout homopolymère d'un monomère diène, particulièrement un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs monomères diènes entre eux ou avec un ou plusieurs monomères vinylaromatiques.

Dans le cas de copolymères (b), ceux-ci contiennent de 20 à 99% en poids d'unités diéniques et de 1 à 80 % en poids d'unités issues de monomères vinylaromatiques.

A titre de diènes conjugués conviennent notamment le butadiène-1,3, le 2-méthyl-1,3-butadiène (isoprène), les 2,3-di(alkyle en C1-CS)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. De préférence, le diène conjugué est un dérivé du 1,3-butadiène, plus préférentiellement le 1,3-butadiène.

A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. De préférence le composé vinylaromatique est le styrène.

Préférentiellement, l'élastomère diénique est choisi dans le groupe constitué par les polybutadiènes (BR), les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR), plus particulièrement des copolymères de butadiène-styrène (SBR).

Les élastomères diéniques peuvent avoir toute microstructure qui est fonction des conditions de polymérisation utilisées.

Les élastomères diéniques peuvent être à blocs, statistiques, séquencés, microséquencés...

Selon l'invention l'élastomère diénique modifié comprend des macromolécules comprenant au sein de leur structure une unité de branchement n-fonctionnel, n valant au moins 1, de préférence au moins 3, constituée d'un groupement comprenant au moins deux atomes de silicium substitués par des branches élastomères et reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement hydrocarboné de valence au moins 2 se faisant par l'intermédiaire d'un groupement espaceur divalent.

Selon un mode de réalisation de l'invention, la masse molaire moyenne en nombre des branches élastomères de l'élastomère diénique modifié est inférieure à 150 000 g/mol, préférentiellement de 40 000 g/mol à 100 000 g/mol.

Selon un mode de réalisation de l'invention, l'extrémité des branches élastomères de l'élastomère diénique modifié, non liée à un atome de silicium peut porter une fonction comprenant un atome d'azote, de préférence une fonction amine, cyclique ou acyclique. Toutes ou une partie des extrémités de branches élastomères de l'élastomère diénique modifié est fonctionnalisée par une fonction amine, cyclique ou acyclique, de préférence au moins 70% molaire des extrémités de branches élastomères de l'élastomère diénique modifié sont fonctionnalisées, par rapport au nombre de moles de branches élastomères.

Selon un mode de réalisation de l'invention, l'élastomère diénique modifié comprend des macromolécules comprenant dans leur structure au moins deux atomes de silicium substitués chacun par au plus trois branches élastomères et par au plus trois groupements hydroxyles ou alcoxy.

Les groupements alcoxy substituant l'atome de silicium peuvent être, selon certaines variantes de l'invention, partiellement ou totalement hydrolysés en hydroxyle. Selon ces variantes, tous ou au moins 50% molaire des groupements alcoxy portés par l'élastomère diénique modifié sont hydrolysés en hydroxyle. Particulièrement, au moins 80% molaire des fonctions alcoxy portées par l'élastomère diénique modifié est hydrolysé en hydroxyle, voire 100%.

Les radicaux alkyles des groupements alcoxy substituant les atomes de silicium sont, indépendamment les uns des autres, choisis parmi les radicaux alkyles en C1-C10, voire en C1-C8, de préférence parmi les radicaux alkyles en C1-C4, plus préférentiellement parmi méthyle et éthyle.

Selon l'invention, l'unité de branchement comprend au moins deux atomes de silicium, ces atomes étant reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement hydrocarboné de valence au moins 2 se faisant par l'intermédiaire d'un groupement espaceur divalent. Ce groupement espaceur peut être défini comme étant est un radical hydrocarboné divalent aliphatique, saturé ou non, cyclique ou non, en C1-C18, de préférence un radical hydrocarboné divalent, linéaire ou ramifié, aliphatique en C1-C10, dee préférence encore, un groupement aliphatique divalent, linéaire et saturé, possédant de 3 à 8 atomes de carbones, ou un radical hydrocarboné divalent aromatique en C6-C18.

Selon l'invention, l'unité de branchement est n-fonctionnel, c'est-à-dire qu'au moins n branches élastomères diéniques sont liées à cette unité avec n valant au moins 1 et de préférence au plus 9.

Selon un mode de réalisation de l'invention, le groupement hydrocarboné de valence au moins 2, polymérique ou non, pouvant comprendre au moins un hétéroatome choisi parmi N, O, P, S, présente une valence maximale de 50, préférentiellement sa valence est inférieure ou égale à 4, plus préférentiellement elle est de 2 ou 3, plus préférentiellement encore sa valence est de 2.

Selon ce mode de réalisation préférentiel selon lequel la valence du groupement hydrocarboné est 2, l'unité de branchement n-fonctionnel comprend deux atomes de silicium substitués par des branches élastomères reliés entre eux par l'intermédiaire du groupement hydrocarboné de valence 2, polymérique ou non, pouvant comprendre au moins un hétéroatome choisi parmi N, O, P, S, la liaison entre un atome de silicium et ce groupement hydrocarboné se faisant par l'intermédiaire d'un groupement espaceur divalent. Dans ce cas, de préférence, ce groupement hydrocarboné de valence 2 comprend au moins un atome d'azote ou au moins un atome d'oxygène.

Les différentes variantes, préférentielles ou non concernant le groupement espaceur, le nombre de branches élastomères, la substitution des atomes de silicium par des groupements alcoxy, la valence du groupement hydrocarboné de l'unité de branchement, le nombre de branches de l'unité de branchement,... sont combinables entre elles.

Les macromolécules de l'élastomère diénique modifié de l'invention répondent tout particulièrement à la formule I suivante : 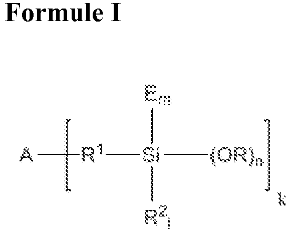 dans laquelle
- E représente une branche élastomère diénique,
- les radicaux R représentent, indépendamment les uns des autres, un radical alkyle en C1-C10, voire en C1-C8, de préférence un radical alkyle en C1-C4, plus préférentiellement méthyle ou éthyle, ou un atome d'hydrogène,
- les radicaux R1 représentent, indépendamment l'un de l'autre, un radical hydrocarboné divalent aliphatique, saturé ou non, cyclique ou non, linéaire ou ramifié, en C1-C18, de préférence en C1-C10, plus préférentiellement linéaire et saturé en C3-C8, ou un radical hydrocarboné divalent aromatique en C6-C18 ;
- les radicaux R2 représentent, indépendamment les uns des autres, un radical alkyle en C1-C10, voire en C1-C8, de préférence un radical alkyle en C1-C4, plus préférentiellement méthyle ou éthyle,
- A représente un groupement hydrocarboné de valence k, polymérique ou non, pouvant comprendre au moins un hétéroatome choisi parmi N, O, P, S,
- m et n sont indépendamment les uns des autres des entiers variant de 0 à 3 et 1 est un entier valant 0 ou 1, avec m+n+l = 3, de préférence 1 vaut 0,
- k est un entier d'au moins 2 et préférentiellement d'au plus 5, préférentiellement encore d'au plus 4, plus préférentiellement 2 ou 3, encore plus préférentiellement 2.

Selon des variantes de l'invention, A représente un groupement hydrocarboné de valence k, très préférentiellement 2, polymérique ou non, comprenant au moins un atome d'azote ou au moins un atome d'oxygène.

Selon des variantes de l'invention combinables avec les précédentes, E représente une branche élastomère diénique portant en extrémité de chaîne un groupement comprenant un atome d'azote, plus particulièrement une fonction amine, cyclique ou acyclique.

Selon l'invention, les macromolécules branchées sont constituées de macromolécules dont l'ensemble des points de branchement est lié à au moins trois blocs élastomères diéniques. Pour des raisons de faisabilité et de réalité technique, ces macromolécules présentent de préférence une répartition des blocs élastomères diéniques de part et d'autre de l'unité de branchement n-fonctionnel, sur les points de branchement, C'est-à-dire que tous les blocs élastomères ne sont pas liés au même point de branchement mais répartis sur les deux points de branchement. Ainsi, les macromolécules à trois branches peuvent comporter deux branches élastomères à une extrémité de l'unité de branchement n-fonctionnel et une branche élastomère à l'autre extrémité, les macromolécules à quatre branches peuvent comporter deux branches élastomères à une extrémité de l'unité de branchement n-fonctionnel et deux branches élastomères à l'autre extrémité ou trois branches élastomères à une extrémité de l'unité de branchement n-fonctionnel et une branche élastomère à l'autre extrémité, et ainsi de suite.

L'élastomère diénique modifié selon une variante de réalisation préférée de l'invention comprend au moins 50% en poids de macromolécules branchées par rapport au poids total de l'élastomère diénique modifié, de préférence au moins 80% en poids, les macromolécules branchées étant l'ensemble des macromolécules à au moins trois branches de l'élastomère diénique modifié.

Pour illustrer cette variante avec la formule I, le lecteur comprendra que lorsque les macromolécules de l'élastomère diénique modifié de l'invention répondent à la formule I avec k valant 2, selon cette variante, au moins 50% en poids de macromolécules par rapport au poids total de l'élastomère diénique modifié, de préférence au moins 80% en poids, répond à la formule I avec k valant 2 et le nombre total des E valant au moins 3.

Selon une autre variante de réalisation préférée de l'invention, combinée ou non à la précédente variante, l'élastomère diénique modifié comprend au moins 35% en poids de macromolécules branchées à trois branches, par rapport au poids total de l'élastomère diénique modifié, de préférence au moins 40%.

Pour illustrer cette variante avec la formule I, le lecteur comprendra que lorsque les macromolécules de l'élastomère diénique modifié de l'invention répondent à la formule I avec k valant 2, selon cette variante, au moins 35% en poids de macromolécules par rapport au poids total de l'élastomère diénique modifié, de préférence au moins 40% en poids, répond à la formule I avec k valant 2 et le nombre total des E valant 3.

Les différentes variantes et aspects préférentiels concernant la nature de l'élastomère diénique modifié, la fonctionnalisation des branches élastomères, leur Mn, la fonction alcoxy, le nombre d'atomes de silicium, le groupement espaceur et le groupement comprenant au moins un atome d'azote, le taux de macromolécules branchées, le taux de macromolécules à trois branches ... sont combinables entre eux sous réserve de leur compatibilité.

Selon des variantes avantageuses de l'invention, l'élastomère diénique modifié comprenant des macromolécules comprenant au sein de sa structure une unité de branchement comprenant au moins deux atomes de silicium reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement hydrocarboné de valence au moins 2 se faisant par l'intermédiaire d'un groupement espaceur divalent, est tel qu'au moins une des caractéristiques suivantes est respectée, au moins deux, au moins trois, au moins quatre, au moins cinq, au moins six, au moins sept, au moins huit, au moins neuf et de préférence toutes :
- l'élastomère diénique modifié comprend deux atomes de silicium,
- le groupement hydrocarboné, polymérique ou non, reliant les atomes de silicium entre eux est de valence 2 et peut comprendre au moins un hétéroatome choisi parmi N et O,
- les groupements espaceurs sont des radicaux aliphatiques divalents, linéaires et saturés, possédant de 3 à 8 atomes de carbone,
- le ou les groupes alcoxy substituant un ou des atomes de silicium, comporte 1 à 4 atomes de carbone, de préférence c'est un radical méthoxy ou un radical éthoxy,
- toutes ou une partie des fonctions alcoxy substituant un ou des atomes de silicium est hydrolysé en hydroxyle,
- l'élastomère diénique est un copolymère butadiène-styrène,
- toutes ou une partie des extrémités de branches élastomères non liées à un atome de silicium est fonctionnalisée par rapport au nombre de moles de bout de chaîne, par une fonction amine,
- la Mn moyenne des branches élastomères est inférieure à 150 000 g/mol, de préférence de 40 000 g/mol à 100 000 g/mol,
- l'élastomère diénique modifié comprend au moins 50% en poids de macromolécules branchées à au moins trois branches,
- l'élastomère diénique modifié comprend au moins 35% en poids de macromolécules branchées à trois branches.

L'élastomère diénique modifié selon l'invention peut être obtenu selon un procédé de synthèse comprenant la réaction d'un élastomère diénique vivant, résultant de la polymérisation d'au moins un monomère diène, avec un agent de modification spécifique choisi parmi des molécules comprenant au moins deux groupements choisis parmi les trialcoxysilyles, les dialcoxyalkylsilyles, les trihalogénosilyles et les dihalogénoalkylsilyles, de préférence les trialcoxysilyles ou les trihalogénosilyles, les groupements alcoxysilyles ou halogénosilyles étant reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement se faisant par l'intermédiaire d'un groupement espaceur divalent.

L'invention a également pour objet une composition de caoutchouc à base au moins d'une charge renforçante comprenant un taux de silice supérieur ou égal à 80 pce, de préférence supérieur ou égal à 100 pce et d'une matrice élastomère comprenant un taux d'un élastomère diénique modifié supérieur ou égal à 75 pce, l'élastomère diénique modifié étant obtenu par ce procédé de synthèse y compris ses aspects particuliers, avantageux et préférentiels décrits ci-après.

L'étape de polymérisation selon l'invention peut être mise en oeuvre par polymérisation anionique initiée par exemple au moyen d'un composé organique d'un métal alcalin ou alcalino-terreux. La polymérisation d'au moins un monomère diène conjugué selon ces différentes mises en oeuvre génère des chaînes élastomères possédant un site réactif en extrémité de chaîne. On parle alors communément d'élastomère vivant ou de chaîne vivante.

Dans le cadre d'une polymérisation anionique, l'initiateur de polymérisation peut être tout initiateur anionique connu. Un initiateur contenant un métal alcalin tel que le lithium est utilisé à titre préférentiel. Comme initiateurs contenant du lithium conviennent notamment ceux comportant au moins une liaison carbone-lithium ou au moins une liaison azote-lithium. Des composés représentatifs sont les organolithiens aliphatiques tels que l'éthyllithium, le n-butyllithium (n BuLi), l'isobutyllithium, et les amidures de lithium obtenus à partir d'une amine secondaire cyclique, telle que la pyrrolidine et l'hexaméthylèneimine. De tels initiateurs de polymérisation anionique sont connus de l'homme de l'art.

La polymérisation peut être effectuée de manière connue en soi, en continu ou en discontinu. On effectue généralement la polymérisation à des températures comprises entre 0°C et 110°C et de préférence de 40°C à 100°C, voire de 50°C à 90°C. Le procédé de polymérisation peut être mis en oeuvre en solution, en milieu plus ou moins concentré ou dilué. Le solvant de polymérisation est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Les monomères utilisables dans le cadre de l'invention sont décrits plus haut.

Afin d'affiner la microstructure des élastomères diéniques, on peut ajouter ou non un agent modifiant et/ou randomisant dans des quantités appropriées. Ceci est de l'ordre des connaissances générales de l'homme du métier.

Ces variantes concernant l'étape de polymérisation sont combinables avec les variantes et aspects préférentiels ou alternatifs décrits ci-après.

La polymérisation d'au moins un monomère diène conjugué selon l'invention génère des chaînes élastomères possédant un site réactif en extrémité de chaîne. Ces chaînes vivantes, ou élastomères vivants, réagissent ensuite sur l'agent de modification lors de l'étape de modification. L'agent de modification comporte au moins un groupement réactif vis-à-vis du site réactif de l'élastomère, en l'occurrence des groupements alcoxy ou des atomes d'halogène substituant les atomes de silicium.

La quantité d'agent de modification destiné à réagir avec l'élastomère diénique vivant dépend essentiellement du type d'élastomère diénique modifié voulu. De manière générale, le rapport molaire de groupements réactifs de l'agent vis-à-vis de l'élastomère vivant, au métal de l'initiateur de polymérisation est d'au moins 0,1, de préférence d'au moins 0,15, plus préférentiellement d'au moins 0,25, et d'au plus 0,45, préférentiellement d'au plus 0,40, voire d'au plus 0,35. Ainsi, selon une variante particulièrement avantageuse de l'étape de modification, le rapport molaire du l'agent de modification au métal de l'initiateur de polymérisation a une valeur dans un domaine allant de 0,25 à 0,40.

Les conditions d'adjonction et de réaction de l'agent de modification sur l'élastomère sont classiques en matière de modification en polymérisation anionique au moyen de composés alcoxysilanes ou halogénosilane et connues de l'homme du métier. Ces conditions ne comportent pas de limitations particulières.

Par exemple, cette réaction sur l'élastomère diénique vivant peut se dérouler à une température comprise entre -20°C et 100°C, par addition de l'agent de modification sur les chaînes élastomères vivantes ou inversement. Cette réaction peut bien sûr être réalisée avec un ou plusieurs agents de modification différents.

Le mélangeage de l'élastomère vivant avec l'agent de modification peut être réalisé par tout moyen approprié notamment à l'aide de tout mélangeur disposant d'une agitation de type statique et/ou tout mélangeur dynamique de type parfaitement agité connu par l'homme du métier. Ce dernier détermine le temps de réaction entre le polymère diénique vivant et l'agent de modification qui peut varier de quelques minutes, par exemple 2 minutes, à plusieurs heures, par exemple 2 heures.

Selon des variantes de l'invention, l'agent de modification est choisi parmi les composés silanes répondant à la formule II :

A - [R1 - Si (Y)ᵢR2ₗ]ₖ

dans laquelle
- Y représentent soit un atome d'halogène, en particulier le chlore, soit un groupement alcoxy OR, R représentant, indépendamment les uns des autres, un radical alkyle C1-C4, de préférence méthyle ou éthyle,
- R1 représentent, indépendamment l'un de l'autre, un radical hydrocarboné divalent aliphatique, saturé ou non, cyclique ou non, linéaire ou ramifié, en C1-C18, de préférence en C1-C10, plus préférentiellement linéaire et saturé en C3-C8 ;
- R2 représentent, indépendamment les uns des autres, un radical hydrocarboné aliphatique, saturé ou non, cyclique ou non, linéaire ou ramifié, en C1-C18, de préférence un radical alkyle C1-C4, plus préférentiellement méthyle ou éthyle,
- A représente groupement hydrocarboné de valence k, polymérique ou non, pouvant comprendre au moins un hétéroatome choisi parmi N, O, P, S,
- i est un entier valant 2 ou 3 et 1 est un entier valant 0 ou 1, avec i+l = 3, de préférence 1 vaut 0,
- k est un entier d'au moins 2 et préférentiellement d'au plus 50, préférentiellement encore d'au plus 4, plus préférentiellement 2 ou 3, encore plus préférentiellement 2.

Selon des variantes de l'invention, A représente un groupement hydrocarboné de valence k, préférentiellement de valence 2, polymérique ou non, comprenant au moins un atome d'azote ou au moins un atome d'oxygène.

On peut citer par exemple à titre de molécules dont le groupement A représente un groupement hydrocarboné de valence 2, polymérique ou non, comprenant au moins un atome d'azote ou au moins un atome d'oxygène, les composés bis (triethoxysilylalkyl) methylamine, bis (triethoxysilylalkyl) ethylamine, bis (triethoxysilylalkyl) propylamine, bis (triethoxysilylalkyl) butylamine, bis (triethoxysilylalkyl) phenylamine, et les composés trimethoxysilyl correspondant à ces composés triethoxysilyl, les composés bis (trimethoxysilylalkyl) N-trimethylsilylamine, bis (triethoxysilylalkyl) N-trimethylsilylamine, dans lesquels le radical alkyl est en C1-C10, de préférence en C3-C8 .

On peut également citer par exemple à titre de molécules dont le groupement A représente un groupement hydrocarboné de valence 2, polymérique ou non, comprenant au moins un atome d'azote ou au moins un atome d'oxygène, les composés bis (trimethoxysilylalkyl) piperazine, bis (triethoxysilylalkyl) piperazine, bis (trimethoxysilylalkyl) imidazolidine, bis (triethoxysilylalkyl) imidazolidine, bis (trimethoxysilylalkyl) hexahydropyrimidine, bis (triethoxysilylalkyl) hexahydropyrimidine, dans lesquels le radical alkyl est en C1-C10, de préférence en C3-C8.

On peut également citer par exemple à titre de molécules dont le groupement A représente un groupement hydrocarboné de valence 2, polymérique ou non, comprenant au moins un atome d'azote ou au moins un atome d'oxygène, les composés poly(oxy-1,2-ethanediyl)-α-[3-(triethoxysilyl)alkyl]-ω-[3-(triethoxysilyl)alcoxy], le poly(oxy-1,2-ethanediyl)-α-[3-(trimethoxysilyl)alkyl]-ω-[3-(trimethoxysilyl)alcoxy], le poly[oxy(methyl-1,2-ethanediyl)]-α-[3-(trichlorosilyl)alkyl]-ω-[3-(trichlorosilyl)alcoxy], dans lesquels le radical alkyl et le radical alcoxy sont en C1-C10, de préférence en C3-C8.

A l'issue de ces étapes de polymérisation et de fonctionnalisation, le procédé de synthèse de l'élastomère diénique modifié selon l'invention peut se poursuivre de manière connue en soi par les étapes de récupération de l'élastomère modifié.

Conformément à l'invention, la composition de caoutchouc comprend une matrice élastomère comprenant au moins 75 pce d'élastomère diénique modifié tel que décrit ci-dessus, de préférence au moins 80 pce, et plus préférentiellement encore 100 pce d'élastomère diénique modifié. L'élastomère diénique modifié peut être constitué d'un mélange de plusieurs élastomères diéniques modifiés tels que décrits plus haut.

Selon une variante de l'invention, la matrice élastomère peut comprendre également moins de 25 pce, de préférence moins de 20 pce, d'au moins un élastomère diénique différent de l'élastomère diénique modifié décrit plus haut. A titre d'élastomère diénique complémentaire, on peut citer tout élastomère diénique qu'il soit naturel ou synthétique. En particulier, l'élastomère diénique peut être choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR)

Conformément à l'invention, la composition de caoutchouc comprend également au moins 80 pce de silice, préférentiellement au moins 100 pce, et de préférence d'au plus 200 pce, plus préférentiellement d'au plus 150 pce, le taux optimal étant de manière connue différent selon les applications particulières visées.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g, encore plus préférentiellement entre 130 et 300 m²/g, voire entre 130 et 250 m²/g.

On peut utiliser outre la silice, tout autre type de charge renforçante connue pour ses capacités à renforcer une composition de caoutchouc utilisable pour la fabrication de bandes de roulement de pneus, par exemple du noir de carbone ou une autre charge inorganique renforçante, ou encore un mélange de ces charges.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneus (noirs dits de grade pneu). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneus; une telle charge se caractérise généralement, de manière connue, par la présence de groupes hydroxyle (-OH) à sa surface.

Comme charges inorganiques renforçantes conviennent notamment des charges minérales du type siliceux, outre la silice (SiO2), ou du type alumineux ou encore les oxydes de titane renforçants, par exemple décrits dans US 6 610 261 et US 6 747 087. Parmi les charges minérales du type alumineux, on peut citer en particulier l'alumine (Al2O3) ou les (oxyde)hydroxydes d'aluminium.

Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneus tels que décrits par exemple dans les documents brevet WO 96/37547, WO 99/28380.

L'état physique sous lequel se présente la charge inorganique renforçante, y compris la silice, est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

Selon une variante avantageuse de l'invention, la charge renforçante est majoritairement de la silice, c'est-à-dire qu'elle comprend plus de 50% en poids du poids total de la charge renforçante, de silice.

Selon cette variante, lorsque du noir de carbone est également présent, il peut être utilisé à un taux inférieur à 20 pce, plus préférentiellement inférieur à 10 pce, et à un taux supérieur à 0,5 pce, notamment supérieur ou égal à 1.

L'utilisation de la silice comme charge renforçante peut nécessiter l'utilisation d'un agent de couplage pour établir la liaison entre la charge et l'élastomère. On peut alors utiliser comme agents de couplage des organosilanes, notamment des alkoxysilanes polysulfurés ou des mercaptosilanes, ou encore des polyorganosiloxanes au moins bifonctionnels.

Un tel agent de couplage ne doit pas être confondu avec l'agent de modification utilisé pour la synthèse de l'élastomère diénique modifié décrite précédemment.

Lorsque la composition selon l'invention comprend un agent de couplage, sa quantité dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone, préférentiellement de 6% à 12% en poids.

La composition de caoutchouc selon l'invention peut également contenir, des activateurs de couplage, des agents de recouvrement des charges ou plus généralement des agents d'aide à la mise en oeuvre susceptibles de manière connue, grâce à une amélioration de la dispersion de la charge dans la matrice élastomère et à un abaissement de la viscosité de la composition, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut également contenir au moins un plastifiant. De manière connue de l'homme du métier des compositions de caoutchouc pour pneu, ce plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

Selon une variante avantageuse de l'invention, le taux total de plastifiant dans la composition est supérieur ou égal à 20 pce, préférentiellement supérieur ou égal à 50 pce, et avantageusement d'au plus 100 pce.

Par définition, une résine hydrocarbonée de haute Tg est par définition un solide à température et pression ambiante (20°C, 1 atm), tandis qu'une huile plastifiante est liquide à température ambiante et qu'une résine hydrocarbonée de faible Tg est visqueuse à température ambiante. La Tg est mesurée selon la norme ASTM D3418 (1999).

De manière connue, les résines hydrocarbonées de haute Tg sont des résines hydrocarbonées, thermoplastiques, dont la Tg est supérieure à 20°C. Les résines hydrocarbonées de haute Tg préférentielles utilisables dans le cadre de l'invention, sont bien connues de l'homme du métier et disponibles commercialement.

Le plastifiant peut contenir également une huile plastifiante (ou huile d'extension) liquide à 20 °C, dit à « basse Tg », c'est-à-dire qui par définition présente une Tg inférieure à 20°C, de préférence inférieure à 40°C.

Toute huile d'extension, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

La composition de caoutchouc conforme à l'invention peut comporter également tout ou partie des additifs et agents de mise en oeuvre usuels, connus de l'homme du métier et habituellement utilisés dans les compositions de caoutchouc pour pneus, en particulier des compositions de caoutchouc de bandes de roulement, comme par exemple, des charges non renforçantes, des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

Selon des variantes très avantageuses de l'invention, la composition de caoutchouc est telle que
*l'élastomère diénique modifié décrit précédemment présente au moins une des caractéristiques suivantes, au moins deux, au moins trois, au moins quatre, au moins cinq, au moins six, au moins sept, au moins huit, au moins neuf et de préférence toutes :
   - l'élastomère diénique modifié comprend deux atomes de silicium,
   - le groupement hydrocarboné, polymérique ou non, reliant les atomes de silicium entre eux est de valence 2 et peut comprendre au moins un hétéroatome choisi parmi N et O,
   - les groupements espaceurs sont des radicaux aliphatiques divalents, linéaires et saturés, possédant de 3 à 8 atomes de carbone,
   - le ou les groupes alcoxy substituant un ou des atomes de silicium, comporte 1 à 4 atomes de carbone, de préférence c'est un radical méthoxy ou un radical éthoxy,
   - toutes ou une partie des fonctions alcoxy substituant un ou des atomes de silicium est hydrolysé en hydroxyle,
   - l'élastomère diénique est un copolymère butadiène-styrène,
   - toutes ou une partie des extrémités de branches élastomères non liées à un
   atome de silicium est fonctionnalisée par rapport au nombre de moles de bout de chaîne, par une fonction amine,
   - la Mn moyenne des branches élastomères est inférieure à 150 000 g/mol, de préférence de 40 000 g/mol à 100 000 g/mol,
   - l'élastomère diénique modifié comprend au moins 50% en poids de macromolécules branchées à au moins trois branches,
   - l'élastomère diénique modifié comprend au moins 35% en poids de macromolécules branchées à trois branches ;
*elle comprend 20 pce ou plus, de préférence 50 pce ou plus, d'au moins un plastifiant,
*elle comprend un système de réticulation ou de vulcanisation.

La composition de caoutchouc conforme à l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomère, les charges, les éventuels autres additifs divers, à l'exception du système de réticulation. L'incorporation de la charge à l'élastomère peut être réalisée en une ou plusieurs fois en malaxant thermo-mécaniquement.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

La phase non-productive est réalisée à haute température, jusqu'à une température maximale comprise entre 110°C et 200°C, de préférence entre 130°C et 185°C, pendant une durée généralement comprise entre 2 et 10 minutes.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement de pneu pour véhicule.

La composition peut être soit à l'état cru (avant réticulation ou vulcanisation), soit à l'état cuit (après réticulation ou vulcanisation), peut être un produit semi-fini qui peut être utilisé dans un pneu

La réticulation de la composition peut être conduite de manière connue de l'homme du métier, par exemple à une température comprise entre 130°C et 200°C, sous pression.

En raison du maintien du compromis de propriétés hystérèse / mise en oeuvre à cru malgré un taux de charge élevé qui caractérise une composition de caoutchouc renforcée selon l'invention, on notera qu'une telle composition peut constituer tout produit semi-fini du pneu et tout particulièrement la bande de roulement, diminuant notamment sa résistance au roulement, tout améliorant ses performances liées au taux élevé de charge renforçante.

L'invention a donc enfin pour objet un pneu comportant un article semi-fini constitué en tout ou en partie d'une composition selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### I - Mesures et tests utilisés

### Détermination de la valeur de la Mn de la branche avant couplage ou étoilage par chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ l g.L-1. Puis la solution est filtrée sur filtre de porosité 0,45µm avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triethylamine, le débit de 1 mL.min-1, la température du système de 35°C et la durée d'analyse de 30 min. Un jeu de deux colonnes WATERS de dénomination commerciale "STYRAGEL HT6E" est utilisé. Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

### Détermination des taux de macromolécules linéaires et macromolécules branchées par la technique de chromatographie d'exclusion stérique haute résolution (SEC haute résolution).

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45 µm avant injection.

L'appareillage utilisé est une chaîne chromatographique "WATERS alliance 2695". Le solvant d'élution est le tétrahydrofurane, le débit de 0,2 ml.min-1, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 µL. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

### Détermination de la viscosité Mooney

Pour les polymères et les compositions de caoutchouc, les viscosités Mooney ML(1+4)100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100°C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

### Calorimétrie différentielle

Les températures de transition vitreuse (Tg) des élastomères sont déterminées à l'aide d'un calorimètre différentiel ("differential scanning calorimeter"), selon la norme ASTM D3418 (1999).

### Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse.

### II - Exemples de préparations des élastomères

### Préparation du polymère A : SBR fonctionnel - témoin

Dans un réacteur de 90 litres, maintenu sous une pression d'azote d'environ 2 bars, contenant 44 kg de méthylcyclohexane, sont injectés 1.74 kg de styrène et 5.84 kg de butadiène ainsi que 1.07L d'une solution de tetrahydrofurane à 0.36 mol.L-1 dans le méthylcyclohexane. Après neutralisation des impuretés dans la solution à polymériser par addition de n-butyllithium, sont ajoutés 716 mL de n-butyllithium à 0.06 mol.L-1 dans le méthylcyclohexane. La polymérisation est conduite à 50°C.

Après 45 minutes, le taux de conversion des monomères atteint 68%. Ce taux est déterminé par pesée d'un extrait séché à 140°C, sous la pression réduite de 200 mmHg. La valeur de la Mn branche avant couplage déterminée par SEC RI est de 120 000 g.mol-1.

1.19L d'une solution de N,N-diméthylaminopropyltriméthoxysilane à 0.018 mol.L-1 dans le méthylcyclohexane sont alors ajoutés (n(N,N-diméthylaminopropyltriméthoxysilane)/ n(n-butyllithium) = 0.5). La solution est agitée à une température de 50°C pendant 30minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité Mooney du polymère est de 70.

La répartition des espèces 1 branche, 2 branches, 3 branches, 4 branches, 5 branches et 6 branches (1b/2b/3b/4b/5b/6b) déterminée par SEC haute résolution est la suivante : 10/87/2/1/0/0.

| | |
|---|---|
| La température de transition vitreuse de ce copolymère est de | - 63°C. |

### Préparation du polymère B : SBR fonctionnel selon l'invention

Dans un réacteur de 90 litres, maintenu sous une pression d'azote d'environ 2 bars, contenant 43 kg de méthylcyclohexane, sont injectés 1.67 kg de styrène et 5.91 kg de butadiène ainsi que 1.01 L d'une solution de tetrahydrofurane à 0.36 mol.L-1 dans le méthylcyclohexane. Après neutralisation des impuretés dans la solution à polymériser par addition de n-butyllithium, sont ajoutés 1628 mL de n-butyllithium à 0.06 mol.L-1 dans le méthylcyclohexane. La polymérisation est conduite à 50°C.

Après 40 minutes, le taux de conversion des monomères atteint 69%. Ce taux est déterminé par pesée d'un extrait séché à 140°C, sous la pression réduite de 200 mmHg. La valeur de la Mn branche avant couplage déterminée par SEC RI est de 52 000 g.mol-1.

1.38 L d'une solution de bis(3-triméthoxysilylpropyl)-N-méthylamine à 0.022 mol.L-1 dans le méthylcyclohexane sont alors ajoutés (n(bis(3-triméthoxysilylpropyl)-N-méthylamine) / n(n-butyllithium) = 0.3). La solution est agitée à une température de 50°C pendant 30 minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de dévolatilisation en étuve.

La viscosité Mooney du polymère est de 38.

La répartition des espèces 1 branche, 2 branches, 3 branches, 4 branches, 5 branches et 6 branches (1b/2b/3b/4b/5b/6b) déterminée par SEC haute résolution est la suivante : 2/11/48/33/5/1.

| | |
|---|---|
| La température de transition vitreuse de ce copolymère est de | - 64°C. |

### Préparation du polymère C : SBR fonctionnel selon l'invention

Dans un réacteur de 90 litres, maintenu sous une pression d'azote d'environ 2 bars, contenant 44 kg de méthylcyclohexane, sont injectés 1.67 kg de styrène et 5.91 kg de butadiène ainsi que 1.01 L d'une solution de tetrahydrofurane à 0.36 mol.L-1 dans le méthylcyclohexane. Après neutralisation des impuretés dans la solution à polymériser par addition de n-butyllithium, sont ajoutés 999 mL de n-butyllithium à 0.06 mol.L-1 dans le méthylcyclohexane. La polymérisation est conduite à 50°C.

Après 42 minutes, le taux de conversion des monomères atteint 68%. Ce taux est déterminé par pesée d'un extrait séché à 140°C, sous la pression réduite de 200 mmHg. La valeur de la Mn branche avant couplage déterminée par SEC RI est de 81 000 g.mol-1.

0.76 L d'une solution de bis(3-triméthoxysilylpropyl)-N-méthylamine à 0.022 mol.L-1 dans le méthylcyclohexane sont alors ajoutés (n(bis(3-triméthoxysilylpropyl)-N-méthylamine) / n(n-butyllithium) = 0.26). La solution est agitée à une température de 50°C pendant 30 minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de dévolatilisation en étuve.

La viscosité Mooney du polymère est de 71.

La répartition des espèces 1 branche, 2 branches, 3 branches, 4 branches, 5 branches et 6 branches (1b/2b/3b/4b/5b/6b) déterminée par SEC haute résolution est la suivante : 3/5/39/50/4/0.

| | |
|---|---|
| La température de transition vitreuse de ce copolymère est de | - 64°C. |

### Préparation du polymère D : SBR fonctionnel amine en extrémité de branches - témoin

Dans un réacteur de 90 litres, maintenu sous une pression d'azote d'environ 2 bars, contenant 44 kg de méthylcyclohexane, sont injectés 1.67 kg de styrène et 5.91 kg de butadiène ainsi que 1.01 L d'une solution de tetrahydrofurane à 0.36 mol.L-1 dans le méthylcyclohexane. Après neutralisation des impuretés dans la solution à polymériser par addition de n-butyllithium, sont ajoutés 785 mL d'hexaméthylènimine lithiée à 0.06 mol.L-1 dans le méthylcyclohexane. La polymérisation est conduite à 50°C.

Après 49 minutes, le taux de conversion des monomères atteint 70%. Ce taux est déterminé par pesée d'un extrait séché à 140°C, sous la pression réduite de 200 mmHg. La valeur de la Mn branche avant couplage déterminée par SEC RI est de 113 000 g.mol-1.

1.22 L d'une solution de N,N-diméthylaminopropyltriméthoxysilane à 0.018 mol.L-1 dans le méthylcyclohexane sont alors ajoutés (n(N,N-diméthylaminopropyltriméthoxysilane)/ n(hexaméthylènimine lithiée) = 0.5). La solution est agitée à une température de 50°C pendant 30 minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100°C pendant 15 minutes.

La viscosité Mooney du polymère est de 62.

La répartition des espèces 1 branche, 2 branches, 3 branches, 4 branches, 5 branches et 6 branches (1b/2b/3b/4b/5b/6b) déterminée par SEC haute résolution est la suivante : 8/88/3/2/0/0.

| | |
|---|---|
| La température de transition vitreuse de ce copolymère est de | - 63°C. |

### Préparation du polymère E : SBR fonctionnel amine en extrémité de branches selon l'invention

Dans un réacteur de 90 litres, maintenu sous une pression d'azote d'environ 2 bars, contenant 43 kg de méthylcyclohexane, sont injectés 1.67 kg de styrène et 5.91 kg de butadiène ainsi que 1.01 L d'une solution de tetrahydrofurane à 0.36 mol.L-1 dans le méthylcyclohexane. Après neutralisation des impuretés dans la solution à polymériser par addition de n-butyllithium, sont ajoutés 1376 mL d'hexaméthylènimine lithiée à 0.06 mol.L-1 dans le méthylcyclohexane. La polymérisation est conduite à 50°C.

Après 43 minutes, le taux de conversion des monomères atteint 70%. Ce taux est déterminé par pesée d'un extrait séché à 140°C, sous la pression réduite de 200 mmHg. La valeur de la Mn branche avant couplage déterminée par SEC RI est de 52 000 g.mol-1.

1.38 L d'une solution de bis(3-triméthoxysilylpropyl)-N-méthylamine à 0.022 mol.L-1 dans le méthylcyclohexane sont alors ajoutés (n(bis(3-triméthoxysilylpropyl)-N-méthylamine) / n(hexaméthylènimine lithiée) = 0.3). La solution est agitée à une température de 50°C pendant 30 minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de dévolatilisation en étuve.

La viscosité Mooney du polymère est de 48.

La répartition des espèces 1 branche, 2 branches, 3 branches, 4 branches, 5 branches et 6 branches (1b/2b/3b/4b/5b/6b) déterminée par SEC haute résolution est la suivante : 3/11/48/32/5/2.

| | |
|---|---|
| La température de transition vitreuse de ce copolymère est de | - 64°C. |

### Préparation du polymère F : SBR fonctionnel amine en extrémité de branches selon l'invention

Dans un réacteur de 90 litres, maintenu sous une pression d'azote d'environ 2 bars, contenant 44 kg de méthylcyclohexane, sont injectés 1.67 kg de styrène et 5.91 kg de butadiène ainsi que 1.01 L d'une solution de tetrahydrofurane à 0.36 mol.L-1 dans le méthylcyclohexane. Après neutralisation des impuretés dans la solution à polymériser par addition de n-butyllithium, sont ajoutés 1096 mL d'hexaméthylènimine lithiée à 0.06 mol.L-1 dans le méthylcyclohexane. La polymérisation est conduite à 50°C.

Après 48 minutes, le taux de conversion des monomères atteint 69%. Ce taux est déterminé par pesée d'un extrait séché à 140°C, sous la pression réduite de 200 mmHg. La valeur de la Mn branche avant couplage déterminée par SEC RI est de 86 000 g.mol-1.

0.76 L d'une solution de bis(3-triméthoxysilylpropyl)-N-méthylamine à 0.022 mol.L-1 dans le méthylcyclohexane sont alors ajoutés (n(bis(3-triméthoxysilylpropyl)-N-méthylamine) / n(hexaméthylènimine lithiée) = 0.27). La solution est agitée à une température de 50°C pendant 30 minutes. La solution est ensuite antioxydée par addition de 0.8 partie pour cent parties d'élastomère (pce) de 4,4'-méthylène-bis-2,6-tert-butylphénol et de 0.2 partie pour cent parties d'élastomère (pce) de N-(1,3-diméthylbutyl)-N'-phényl-p-phénylènediamine. Le copolymère ainsi traité est séparé de sa solution par une opération de dévolatilisation en étuve.

La viscosité Mooney du polymère est de 86.

La répartition des espèces 1 branche, 2 branches, 3 branches, 4 branches, 5 branches et 6 branches (1b/2b/3b/4b/5b/6b) déterminée par SEC haute résolution est la suivante : 3/5/41/49/2/0.

| | |
|---|---|
| La température de transition vitreuse de ce copolymère est de | - 63°C. |

### III - Exemples de préparations des compositions de caoutchouc

Les élastomères A à F ont été utilisés pour la préparation de compositions de caoutchouc de type bande de roulement, comprenant chacune de la silice à titre de charge renforçante selon deux formulations différentes.

Chacune des compositions suivantes est réalisée, dans un premier temps, par un travail thermo-mécanique, puis, dans un second temps de finition, par un travail mécanique.

On introduit successivement, dans un mélangeur interne de laboratoire de type ''Banbury', dont la capacité est de 400 cm3, qui est rempli à 70% et dont la température initiale est d'environ 90°C, l'élastomère, les deux tiers de la silice, le noir, l'agent de couplage et l'huile, puis, environ une minute plus tard, le reste de la charge renforçante, la résine, l'antioxydant, l'acide stéarique et la cire anti-ozone, puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 50 t/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Chacune des compositions présente la formulation suivante (exprimée en pce : parties pour cent parties d'élastomère) :

**Tableau 1**

| Ingrédients | Formulation 1 | Formulation 2 |
|---|---|---|
| Polymère | 100 | 100 |
| Silice | 110 | 70 |
| Noir de carbone | 3 | 3 |
| huile | 13 | 0 |
| Résine | 59 | 46 |
| Agent de couplage | 8.8 | 5.6 |
| Acide stéarique | 3 | 3 |
| Oxyde de Zinc | 1.5 | 1.5 |
| DPG | 2.3 | 1.5 |
| Soufre soluble | 1 | 1 |
| Accélérateur | 2.3 | 1.73 |
| Antioxydant | 3.6 | 2.8 |

| | | |
|---|---|---|
| Silice : "Zeosil 1165MP" de Rhodia, de type HDS. Noir de carbone : grade ASTM N234 de la société Cabot Corporation Huile : Huile de tournesol à 85 % en poids d'acide oléique, « Lubrirob Tod 1880 » de la société Novance Résine : résine DCPD aromatique, Escorez 5600 ou PR383, de la société ExxonMobil Agent de couplage : Silane TESPT Si69, de Degussa DPG : Diphénylguanidine (« Perkacit » DPG de la société Flexsys) Accélérateur : CBS : N-cylohexyl-2-benzothiazol-sulfénamide (« Santocure CBS » de la société Flexsys) Antioxydant : N-(1,3-diméthylbutyl)-N'-phényl-p-phénylènediamine, de la société Flexsys | | |

Ces deux compositions présentent comme différence principale le taux de charge. Les autres différences sont des adaptations connues de l'homme de l'art lorsque le taux de charge est modifié. Ainsi, le taux de plastifiant total (huile + résine) est augmenté avec le taux de charge pour conserver un module pas trop élevé. Le taux de silane et de DPG est lui aussi adapté au taux de charge silice.

### IV - Résultats:

On calcule l'indice de performance selon la formule suivante : 100 / (valeur de tan delta * valeur de mooney mélange).

Plus cet indice est élevé, plus la résistance au roulement est faible et/ou plus la viscosité du mélange est faible, donc la mise en oeuvre aisée.

**Tableau 2**

| polymère | | Tan delta 23°C | Mooney mélange | indice de performance | Tan delta 23°C | Mooney mélange | indice de performance |
|---|---|---|---|---|---|---|---|
| | | Formulation 1 | Formulation 1 | Formulation 1 | Formulation 2 | Formulation 2 | Formulation 2 |
| A | Témoin | 0.146 | 74 | 9.3 | 0.234 | 64 | 6.7 |
| B | Invention | 0.147 | 59 | 11.5 | 0.231 | 47 | 9.2 |
| C | Invention | 0.181 | 43 | 12.8 | 0.23 | 34 | 12.8 |
| D | Témoin avec fonction amine en extrémité de branches | 0.130 | 90 | 8.5 | 0.226 | 86 | 5.1 |
| E | Invention avec fonction amine en extrémité de branche | 0.127 | 86 | 9.2 | 0.193 | 77 | 6.7 |
| F | Invention avec fonction amine en extrémité de branche | 0.145 | 62 | 11.1 | 0.185 | 70 | 7.7 |

Les exemples ci-dessus montrent que :
En comparant la composition 1A et la composition 1B : l'élastomère selon l'invention présente un meilleur indice de performance que l'élastomère témoin,
En comparant la composition 2A et la composition 2B, l'élastomère selon l'invention présente un meilleur indice de performance.

Donc l'élastomère selon l'invention présente un meilleur indice de performance quelque-soit la Formulation et le taux de charge utilisé.

En comparant 1D et 1E : l'élastomère selon l'invention présente un compromis de performance amélioré par rapport à ce témoin qui comporte aussi une fonction amine en bout de chaîne.

En comparant 2D et 2E, l'élastomère selon l'invention présente aussi un indice de performance amélioré par rapport à ce témoin qui comporte aussi une fonction amine en bout de chaîne.

Ainsi le polymère selon l'invention avec une fonction amine en bout de chaîne présente une performance améliorée par rapport à un polymère qui présente une amine en bout de chaîne mais n'est pas selon l'invention.

En comparant 1B et 2B : on remarque aussi que l'indice de performance du polymère selon l'invention est plus élevé dans la Formulation 1 présentant le plus fort taux de charge silice.

En comparant 1E et 2E, on conclut que l'élastomère avec une fonction amine en bout de chaîne selon l'invention présente un indice de performance amélioré dans la Formulation 1 à fort taux de charge.

Enfin en comparant 1B et 1E, on observe que le polymère selon l'invention est particulièrement utile pour atteindre une valeur de tan delta 23°C faible, ie un faible résistance au roulement, lorsque le polymère présente une fonction amine en bout de chaîne.

Les exemples ci-dessus montrent que les compositions comprenant un élastomère diénique modifié selon l'invention ont un compromis faible tan delta / faible Mooney mélange meilleur que les compositions comprenant un élastomère diénique modifié de l'art antérieur, mais surtout que ce gain sur le compromis hystérèse/Mooney est d'autant plus fort que la Formulation contient un taux de silice élevé.

Ce gain est aussi d'autant plus fort que le polymère spécifique contient une fonction amine en extrémité des branches (comparaison entre polymère I et I HMN).

Aussi l'utilisation d'une composition de caoutchouc selon l'invention comprenant un fort taux de silice, supérieur ou égal à 80 pce, et un élastomère modifié spécifique permet de manière inattendue de maintenir un compromis faible tan delta / faible Mooney par rapport à une composition comprenant un taux de silice plus faible. L'invention permet ainsi de bénéficier de certaines performances du pneu liées directement à l'augmentation du taux de charge renforçante, en minimisant l'effet de ce taux élevé sur les propriétés de mise en oeuvre des compositions et d'hystérèse de celles-ci, donc de résistance au roulement du pneu.

## Revendications

1. Composition de caoutchouc à base au moins d'une charge renforçante comprenant de la silice et d'une matrice élastomère comprenant un élastomère diénique modifié, **caractérisée en ce que**
- le taux de silice est supérieur ou égal à 80 pce, de préférence supérieur ou égal à 100 pce,
- le taux d'élastomère diénique modifié est supérieur ou égal à 75 pce, et
- l'élastomère diénique modifié comprend des macromolécules comprenant au sein de leur structure une unité de branchement n-fonctionnel, n valant au moins 1, constituée d'un groupement comprenant au moins deux atomes de silicium substitués par des branches élastomères et reliés entre eux par l'intermédiaire d'un groupement hydrocarboné de valence au moins 2, polymérique ou non, pouvant comprendre au moins un hétéroatome choisi parmi N, O, P, S, la liaison entre un atome de silicium et ce groupement hydrocarboné de valence au moins 2 se faisant par l'intermédiaire d'un groupement espaceur divalent.

2. Composition selon la revendication 1, **caractérisée en ce que** les branches élastomères de l'élastomère diénique modifié ont une masse molaire moyenne en nombre (Mn) allant de 40 000 g/mol à 100 000 g/mol.

3. Composition selon la revendication 1 ou 2, **caractérisée en ce que** l'extrémité des branches élastomères de l'élastomère diénique modifié, non liée à un atome de silicium porte une fonction comprenant un atome d'azote.

4. Composition selon l'une quelconque des revendications 1 à 3, **caractérisée en ce que** l'unité de branchement n-fonctionnel au sein de la structure de l'élastomère diénique modifié comprend au moins deux atomes de silicium substitués chacun par au plus trois branches élastomères et par au plus trois groupements hydroxy ou alcoxy, indépendamment les uns des autres en C₁-C₁₀, voire en C₁-C₈, de préférence en C₁-C₄, plus préférentiellement parmi méthoxy et éthoxy.

5. Composition selon la revendication 4, **caractérisée en ce que** les groupements alcoxy portés par l'élastomère diénique modifié sont tous ou en partie hydrolysés en hydroxyle.

6. Composition selon l'une quelconque des revendications 1 à 5, **caractérisée en ce que** le groupement espaceur est un radical hydrocarboné divalent aliphatique, saturé ou non, cyclique ou non, en C₁-C₁₈, de préférence un radical hydrocarboné divalent, linéaire ou ramifié, aliphatique en C₁-C₁₀, plus préférentiellement un radical hydrocarboné divalent linéaire et saturé en C₃-C₈, ou un radical hydrocarboné divalent aromatique en C₆-C₁₈.

7. Composition selon l'une quelconque des revendications 1 à 6, **caractérisée en ce que** l'unité de branchement n-fonctionnel au sein de la structure de l'élastomère diénique modifié comprend deux atomes de silicium reliés entre eux par l'intermédiaire d'un groupement hydrocarboné de valence au moins 2, polymérique ou non, pouvant comprendre au moins un hétéroatome choisi parmi N, O, P, S, de préférence N ou O.

8. Composition selon l'une quelconque des revendications 1 à 7, **caractérisée en ce que** les macromolécules de l'élastomère diénique modifié répondent à la formule I suivante : 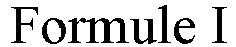 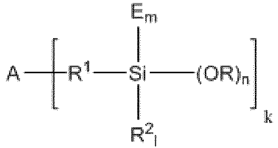 dans laquelle
- E représente une branche élastomère diénique ;
- les radicaux R représentent, indépendamment les uns des autres, un radical alkyle en C₁-C₁₀, voire en C₁-C₈, de préférence un radical alkyle en C₁-C₄, plus préférentiellement méthyle ou éthyle, ou un atome d'hydrogène ;
- les radicaux R¹ représentent, indépendamment l'un de l'autre, un radical hydrocarboné divalent aliphatique, saturé ou non, cyclique ou non, linéaire ou ramifié, en C₁-C₁₈, de préférence en C₁-C₁₀, plus préférentiellement linéaire et saturé en C₃-C₈,ou un radical hydrocarboné divalent aromatique en C₆-C₁₈ ;
- les radicaux R² représentent, indépendamment les uns des autres, un radical alkyle en C₁-C₁₀, voire en C₁-C₈, de préférence un radical alkyle en C₁-C₄, plus préférentiellement méthyle ou éthyle,
- A représente un groupement hydrocarboné de valence k, polymérique ou non, pouvant comprendre au moins un hétéroatome choisi parmi N, O, P, S,
- m et n sont indépendamment les uns des autres des entiers variant de 0 à 3 et 1 est un entier valant 0 ou 1, avec m+n+1 = 3, de préférence 1 vaut 0,
- k est un entier d'au moins 2 et préférentiellement d'au plus 5, préférentiellement encore d'au plus 4, plus préférentiellement 2 ou 3, encore plus préférentiellement 2.

9. Composition selon la revendication 8, **caractérisée en ce que** l'élastomère diénique modifié répond à la formule I dans laquelle A représente un groupement hydrocarboné de valence k, préférentiellement 2, polymérique ou non, comprenant au moins un atome d'azote ou au moins un atome d'oxygène.

10. Composition selon la revendication 8 ou 9, **caractérisée en ce que** l'élastomère diénique modifié répond à la formule I dans laquelle E représente une branche élastomère diénique portant en extrémité de chaîne un groupement comprenant un atome d'azote, plus particulièrement une fonction amine, cyclique ou acyclique.

11. Composition selon l'une quelconque des revendications 1 à 10, **caractérisée en ce que** l'élastomère diénique modifié comprend au moins 50% en poids, de préférence au moins 80% en poids de macromolécules branchées par rapport au poids total de l'élastomère diénique modifié.

12. Composition selon l'une quelconque des revendications 1 à 11, **caractérisée en ce que** l'élastomère diénique modifié comprend au moins 35% en poids, de préférence au moins 40% en poids de macromolécules branchées à trois branches, par rapport au poids total de l'élastomère diénique modifié.

13. Composition selon l'une quelconque des revendications 1 à 12, **caractérisée en ce que** au moins une des caractéristiques suivantes est respectée, au moins deux, au moins trois, au moins quatre, au moins cinq, au moins six, au moins sept, au moins huit, au moins neuf et de préférence toutes :
- l'élastomère diénique modifié comprend deux atomes de silicium,
- le groupement hydrocarboné, polymérique ou non, reliant les atomes de silicium entre eux est de valence 2 et peut comprendre au moins un hétéroatome choisi parmi N et O,
- les groupements espaceurs sont des radicaux aliphatiques divalents, linéaires et saturés, possédant de 3 à 8 atomes de carbone,
- le ou les groupes alcoxy substituant un ou des atomes de silicium, comporte 1 à 4 atomes de carbone, de préférence c'est un radical méthoxy ou un radical éthoxy,
- toutes ou une partie des fonctions alcoxy substituant un ou des atomes de silicium est hydrolysé en hydroxyle,
- l'élastomère diénique est un copolymère butadiène-styrène,
- toutes ou une partie des extrémités de branches élastomères non liées à un atome de silicium est fonctionnalisée par rapport au nombre de moles de bout de chaîne, par une fonction amine,
- la Mn moyenne des branches élastomères est inférieure à 150 000 g/mol, de préférence de 40 000g/mol à 100 000g/mol,
- l'élastomère diénique modifié comprend au moins 50%, de préférence au moins 80% en poids de macromolécules branchées à au moins trois branches,
- l'élastomère diénique modifié comprend au moins 35% de préférence au moins 40% en poids de macromolécules branchées à trois branches.

14. Composition selon l'une quelconque des revendications 1 à 13, **caractérisée en ce qu'**elle comprend 20 pce ou plus, de préférence 50 pce ou plus, d'au moins un plastifiant.

15. Pneu comportant un article semi-fini constitué en tout ou en partie d'une composition selon l'une quelconque des revendications 1 à 14.

## Patentansprüche

1. Kautschukzusammensetzung auf Basis von mindestens einem verstärkenden Füllstoff, der Kieselsäure umfasst, und einer Elastomermatrix, die ein modifiziertes Dienelastomer umfasst, **dadurch gekennzeichnet, dass**
- der Gehalt an Kieselsäure größer oder gleich 80 phe, vorzugsweise größer oder gleich 100 phe, ist,
- der Gehalt an modifiziertem Dienelastomer größer oder gleich 75 phe ist und
- das modifizierte Dienelastomer Makromoleküle umfasst, die in ihrer Struktur eine n-funktionelle Verzweigungseinheit umfassen, wobei n einen Wert von mindestens 1 hat, welche aus einer Gruppe mit mindestens zwei Siliciumatomen, die durch Elastomerarme substituiert sind und über eine polymere oder nichtpolymere Kohlenwasserstoffgruppe mit einer Wertigkeit von mindestens 2, die mindestens ein aus N, O, P und S ausgewähltes Heteroatom umfassen kann, miteinander verbunden sind, besteht, wobei die Bindung zwischen einem Siliciumatom und dieser Kohlenwasserstoffgruppe mit einer Wertigkeit von mindestens 2 über eine zweiwertige Spacergruppe erfolgt.

2. Zusammensetzung nach Anspruch 1, **dadurch gekennzeichnet, dass** die Elastomerarme des modifizierten Dienelastomers eine zahlenmittlere Molmasse (Mn) im Bereich von 40.000 g/mol bis 100.000 g/mol aufweisen.

3. Zusammensetzung nach Anspruch 1 oder 2, **dadurch gekennzeichnet, dass** das Ende der Elastomerarme des modifizierten Dienelastomers, das nicht an ein Siliciumatom gebunden ist, eine funktionelle Gruppe mit einem Stickstoffatom trägt.

4. Zusammensetzung nach einem der Ansprüche 1 bis 3, **dadurch gekennzeichnet, dass** die n-funktionelle Verzweigungseinheit in der Struktur des modifizierten Dienelastomers mindestens zwei Siliciumatome umfasst, die jeweils durch höchstens drei Elastomerarme und durch höchstens drei Hydroxy- oder Alkoxygruppen substituiert sind, wobei es sich bei den Alkoxygruppen unabhängig voneinander um C₁-C₁₀- oder sogar C₁-C₈- und vorzugsweise C₁-C₄-Alkoxygruppen, weiter bevorzugt aus Methoxy- und Ethoxygruppen, handelt.

5. Zusammensetzung nach Anspruch 4, **dadurch gekennzeichnet, dass** die Alkoxygruppen, die das modifizierte Dienelastomer trägt, ganz oder teilweise zu Hydroxyl hydrolysiert sind.

6. Zusammensetzung nach einem der Ansprüche 1 bis 5, **dadurch gekennzeichnet, dass** es sich bei der Spacergruppe um einen gesättigten oder ungesättigten, cyclischen oder nichtcyclischen, zweiwertigen aliphatischen C₁-C₁₈-Kohlenwasserstoffrest, vorzugsweise einen linearen oder verzweigten zweiwertigen aliphatischen C₁-C₁₀-Kohlenwasserstoffrest, weiter bevorzugt einen linearen und gesättigten zweiwertigen C₃-C₈-Kohlenwasserstoffrest, oder einen zweiwertigen aromatischen C₆-C₁₈-Kohlenwasserstoffrest handelt.

7. Zusammensetzung nach einem der Ansprüche 1 bis 6, **dadurch gekennzeichnet, dass** die n-funktionelle Verzweigungseinheit in der Struktur des modifizierten Dienelastomers zwei Siliciumatome umfasst, die über eine polymere oder nichtpolymere Kohlenwasserstoffgruppe mit einer Wertigkeit von mindestens 2, die mindestens ein aus N, O, P und S, vorzugsweise N oder O, ausgewähltes Heteroatom umfassen kann, miteinander verbunden sind.

8. Zusammensetzung nach einem der Ansprüche 1 bis 7, **dadurch gekennzeichnet, dass** die Makromoleküle des modifizierten Dienelastomers der folgenden Formel I entsprechen: 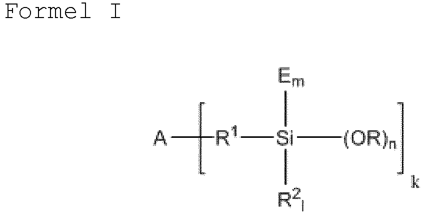 in der
- E für einen Dienelastomerarm steht;
- die Reste R unabhängig voneinander für einen C₁-C₁₀- oder sogar C₁-C₈-Alkylrest, vorzugsweise einen C₁-C₄-Alkylrest, weiter bevorzugt Methyl oder Ethyl, oder ein Wasserstoffatom stehen;
- die Reste R¹ unabhängig voneinander für einen gesättigten oder ungesättigten, cyclischen oder nichtcyclischen, linearen oder verzweigten, zweiwertigen aliphatischen C₁-C₁₈-, vorzugsweise C₁-C₁₀- und weiter bevorzugt linearen und gesättigten C₃-C₈-Kohlenwasserstoffrest oder einen zweiwertigen aromatischen C₆-C₁₈-Kohlenwasserstoffrest stehen;
- die Reste R² unabhängig voneinander für einen C₁-C₁₀- oder sogar C₁-C₈-Alkylrest, vorzugsweise einen C₁-C₄-Alkylrest, weiter bevorzugt Methyl oder Ethyl, stehen,
- A für eine polymere oder nichtpolymere Kohlenwasserstoffgruppe mit der Wertigkeit k, die mindestens ein aus N, O, P und S ausgewähltes Heteroatom umfassen kann, steht,
- m und n unabhängig voneinander ganze Zahlen im Bereich von 0 bis 3 sind und 1 eine ganze Zahl mit einem Wert von 0 oder 1 ist, wobei m+n+1 = 3, vorzugsweise 1 den Wert 0 hat,
- k eine ganze Zahl mit einem Wert von mindestens 2 und vorzugsweise höchstens 5, weiter bevorzugt höchstens 4, weiter bevorzugt 2 oder 3, noch weiter bevorzugt 2, ist.

9. Zusammensetzung nach Anspruch 8, **dadurch gekennzeichnet, dass** das modifizierte Dienelastomer der Formel I entspricht, in der A für eine polymere oder nichtpolymere Kohlenwasserstoffgruppe mit der Wertigkeit k, bevorzugt 2, die mindestens ein Stickstoffatom oder mindestens ein Sauerstoffatom enthält, steht.

10. Zusammensetzung nach Anspruch 8 oder 9, **dadurch gekennzeichnet, dass** das modifizierte Dienelastomer der Formel I entspricht, in der E für einen Dienelastomerarm steht, der am Kettenende eine Gruppe mit einem Stickstoffatom, spezieller eine cyclische oder acyclische Aminfunktion, umfasst.

11. Zusammensetzung nach einem der Ansprüche 1 bis 10, **dadurch gekennzeichnet, dass** das modifizierte Dienelastomer mindestens 50 Gew.-%, vorzugsweise mindestens 80 Gew.-%, verzweigte Makromoleküle, bezogen auf das Gesamtgewicht des modifizierten Dienelastomers, umfasst.

12. Zusammensetzung nach einem der Ansprüche 1 bis 11, **dadurch gekennzeichnet, dass** das modifizierte Dienelastomer mindestens 35 Gew.-%, vorzugsweise mindestens 40 Gew.-%, verzweigte Makromoleküle mit drei Armen, bezogen auf das Gesamtgewicht des modifizierten Dienelastomers, umfasst.

13. Zusammensetzung nach einem der Ansprüche 1 bis 12, **dadurch gekennzeichnet, dass** mindestens eines, mindestens zwei, mindestens drei, mindestens vier, mindestens fünf, mindestens sechs, mindestens sieben, mindestens acht, mindestens neun und vorzugsweise alle der folgenden Merkmale erfüllt sind:
- das modifizierte Dienelastomer umfasst zwei Siliciumatome,
- die polymere oder nichtpolymere Kohlenwasserstoffgruppe, die die Siliciumatome miteinander verbindet, weist die Wertigkeit 2 auf und kann mindestens ein aus N und O ausgewähltes Heteroatom umfassen,
- die Spacergruppen sind lineare und gesättigte zweiwertige aliphatische Reste mit 3 bis 8 Kohlenstoffatomen,
- die Alkoxygruppe bzw. die Alkoxygruppen, mit der bzw. denen ein oder mehrere Siliciumatome substituiert sind, umfasst bzw. umfassen 1 bis 4 Kohlenstoffatome, vorzugsweise handelt es sich um einen Methoxyrest oder einen Ethoxyrest,
- die Alkoxyfunktionen, mit denen ein oder mehrere Siliciumatome substituiert sind, sind ganz oder teilweise zu Hydroxyl hydrolysiert,
- das Dienelastomer ist ein Butadien-StyrolCopolymer,
- die Enden der Elastomerarme, die nicht an ein Siliciumatom gebunden sind, sind, bezogen auf die Molzahl des Kettenendes, ganz oder teilweise durch eine Aminfunktion funktionalisiert,
- das mittlere Mn der Elastomerarme ist kleiner als 150.000 g/mol und beträgt vorzugsweise 40.000 g/mol bis 100.000 g/mol,
- das modifizierte Dienelastomer umfasst mindestens 50 Gew.-%, vorzugsweise mindestens 80 Gew.-%, verzweigte Makromoleküle mit mindestens drei Armen,
- das modifizierte Dienelastomer umfasst mindestens 35 Gew.-%, vorzugsweise mindestens 40 Gew.-%, verzweigte Makromoleküle mit drei Armen.

14. Zusammensetzung nach einem der Ansprüche 1 bis 13, **dadurch gekennzeichnet, dass** sie 20 phe oder mehr, vorzugsweise 50 phe oder mehr, mindestens eines Weichmachers umfasst.

15. Reifen, umfassend ein Halbzeug, das ganz oder teilweise aus einer Zusammensetzung nach einem der Ansprüche 1 bis 14 besteht.

## Claims

1. Rubber composition based at least on a reinforcing filler comprising silica and on an elastomer matrix comprising a modified diene elastomer, **characterized in that**:
- the content of silica is greater than or equal to 80 phr, preferably greater than or equal to 100 phr
- the content of modified diene elastomer is greater than or equal to 75 phr, and
- the modified diene elastomer comprises macromolecules comprising, within their structure, an n-functional branching unit, n having a value of at least 1, consisting of a group comprising at least two silicon atoms which are substituted by elastomer branches and connected together via a polymeric or non-polymeric hydrocarbon group with a valency of at least 2 which can comprise at least one heteroatom chosen from N, O, P, S, the bond between a silicon atom and this hydrocarbon group with a valency of at least 2 being produced via a divalent spacer group.

2. Composition according to Claim 1, **characterized in that** the elastomer branches of the modified diene elastomer have a number-average molar mass (Mn) ranging from 40 000 g/mol to 100 000 g/mol.

3. Composition according to Claim 1 or 2, **characterized in that** the end of the elastomer branches of the modified diene elastomer, which end is not bonded to a silicon atom, bears a functional group comprising a nitrogen atom.

4. Composition according to any one of Claims 1 to 3, **characterized in that** the n-functional branching unit within the structure of the modified diene elastomer comprises at least two silicon atoms each substituted by at most three elastomer branches and by at most three hydroxyl or alkoxy groups, which alkoxy groups are, independently of one another, C₁-C₁₀, indeed even C₁-C₈, preferably C₁-C₄, alkoxy groups, more preferentially methoxy and ethoxy groups.

5. Composition according to Claim 4, **characterized in that** all or part of the alkoxy groups borne by the modified diene elastomer are hydrolysed to give hydroxyl groups.

6. Composition according to any one of Claims 1 to 5, **characterized in that** the spacer group is a saturated or unsaturated, cyclic or non-cyclic, divalent aliphatic Ci-Cis hydrocarbon radical, preferably a linear or branched divalent aliphatic C₁-C₁₀ hydrocarbon radical, more preferentially a saturated and linear divalent C₃-C₈ hydrocarbon radical or a divalent aromatic C₆-C₁₈ hydrocarbon radical.

7. Composition according to any one of Claims 1 to 6, **characterized in that** the n-functional branching unit within the structure of the modified diene elastomer comprises two silicon atoms connected together via a polymeric or non-polymeric hydrocarbon group with a valency of at least 2 which can comprise at least one heteroatom chosen from N, O, P, S, preferably N or O.

8. Composition according to any one of Claims 1 to 7, **characterized in that** the macromolecules of the modified diene elastomer correspond to the following formula I: 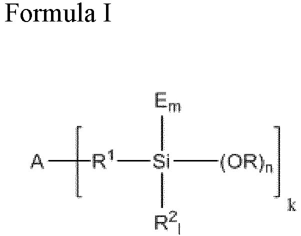 in which:
- E represents a diene elastomer branch;
- the R radicals represent, independently of one another, a C₁-C₁₀, indeed even C₁-C₈, alkyl radical, preferably a C₁-C₄ alkyl radical, more preferentially methyl or ethyl, or a hydrogen atom;
- the R1 radicals represent, independently of one another, a saturated or unsaturated, linear or branched, cyclic or non-cyclic, divalent aliphatic C₁-C₁₈, preferably C₁-C₁₀, hydrocarbon radical, more preferentially a linear and saturated divalent aliphatic C₃-C₈ hydrocarbon radical, or a divalent aromatic C₆-C₁₈ hydrocarbon radical;
- the R2 radicals represent, independently of one another, a C₁-C₁₀, indeed even C₁-C₈, alkyl radical, preferably a C₁-C₄ alkyl radical, more preferentially methyl or ethyl,
- A represents a polymeric or non-polymeric hydrocarbon group with a valency k which can comprise at least one heteroatom chosen from N, O, P, S,
- m and n are, independently of each other, integers varying from 0 to 3 and 1 is an integer having the value 0 or 1, with m + n + l = 3; preferably, 1 has the value 0,
- k is an integer of at least 2 and preferentially of at most 5, more preferentially of at most 4, more preferentially 2 or 3, more preferentially still 2.

9. Composition according to Claim 8, **characterized in that** the modified diene elastomer corresponds to the formula I in which A represents a polymeric or non-polymeric hydrocarbon group with a valency k, preferentially 2, comprising at least one nitrogen atom or at least one oxygen atom.

10. Composition according to Claim 8 or 9, **characterized in that** the modified diene elastomer corresponds to the formula I in which E represents a diene elastomer branch bearing, at the chain end, a group comprising a nitrogen atom, more particularly a cyclic or acyclic amine functional group.

11. Composition according to any one of Claims 1 to 10, **characterized in that** the modified diene elastomer comprises at least 50% by weight, preferably at least 80% by weight, of branched macromolecules, with respect to the total weight of the modified diene elastomer.

12. Composition according to any one of Claims 1 to 11, **characterized in that** the modified diene elastomer comprises at least 35% by weight, preferably at least 40% by weight, of branched macromolecules having three branches, with respect to the total weight of the modified diene elastomer.

13. Composition according to any one of Claims 1 to 12, **characterized in that** at least one, at least two, at least three, at least four, at least five, at least six, at least seven, at least eight, at least nine and preferably all of the following characteristics is/are observed:
- the modified diene elastomer comprises two silicon atoms,
- the polymeric or non-polymeric hydrocarbon group connecting the silicon atoms together has a valency of 2 and can comprise at least one heteroatom chosen from N and O,
- the spacer groups are saturated and linear divalent aliphatic radicals having from 3 to 8 carbon atoms,
- the alkoxy group(s) substituting one or more silicon atoms comprises 1 to 4 carbon atoms; preferably, it is a methoxy radical or an ethoxy radical,
- all or a part of the alkoxy functional groups substituting one or more silicon atoms are hydrolysed to give hydroxyl groups,
- the diene elastomer is a butadiene/styrene copolymer,
- all or a part of the ends of elastomer branches not bonded to a silicon atom are functionalized, with respect to the number of moles of chain end, by an amine functional group,
- the mean Mn of the elastomer branches is less than 150 000 g/mol, preferably from 40 000 g/mol to 100 000 g/mol,
- the modified diene elastomer comprises at least 50%, preferably at least 80%, by weight of branched macromolecules having at least three branches,
- the modified diene elastomer comprises at least 35%, preferably at least 40%, by weight of branched macromolecules having three branches.

14. Composition according to any one of Claims 1 to 13, **characterized in that** it comprises 20 phr or more, preferably 50 phr or more, of at least one plasticizer.

15. Tyre comprising a semi-finished article constituted, in all or in part, by a composition according to any one of Claims 1 to 14.
